# FASCICULE DE BREVET EUROPEEN

(11) **EP 3 794 507 B1**
(45) Date de publication et mention de la délivrance du brevet: **27.04.2022**
(21) Numéro de dépôt: 19728106.6
(22) Date de dépôt: 16.05.2019
(51) Int. Cl.: G06K 19/073, G06K 19/077, G06K 19/02

(54) **PASSEPORT ELECTRONIQUE SECURISE CONTRE LES LECTURES NON AUTORISEES**
GEGEN UNBEFUGTES LESEN GESICHERTER ELEKTRONISCHER REISEPASS
ELECTRONIC PASSPORT SECURED AGAINST UNAUTHORISED READING

(30) Priorité: 18.05.2018 FR 1800487
(43) Date de publication de la demande: 24.03.2021
(73) Titulaire: Smart Packing Solutions, 13790 Rousset (FR)
(72) Inventeur: MEAR, Benjamin, 13790 Rousset (FR); DANLER-BAUMGARTNER, Stéphan, 13790 Rousset (FR)
(74) Mandataire: Nicolle, Olivier
(86) Numéro de dépôt international: PCT/FR2019/000075
(87) Numéro de publication internationale: WO 2019/220026

(56) Documents cités:
- FR-A1- 2 879 789
- FR-A1- 2 919 409
- US-A1- 2010 328 922

## Description

La présente invention concerne un passeport électronique sans contact, ou un document de sécurité équivalent au format d'un livret, permettant un masquage des données contre des lectures non autorisées.

De plus en plus de documents sécurisés, par exemple de type documents d'identité (passeport, carte d'identité, etc.), comportent un circuit électronique à lecture sans contact. Le circuit électronique, encore appelé transpondeur, est formé d'un module électronique comportant une puce, et il est connecté à une antenne. Ce type de dispositif permet par exemple de stocker sous forme numérique des données personnelles d'état civil et des données biométriques et/ou administratives. Lorsque le document sécurisé doit être contrôlé par exemple pour en vérifier la validité, les données stockées sont lues à distance par un système récepteur approprié, encore appelé lecteur, au moyen d'un couplage électromagnétique entre le circuit électronique du document sécurisé et le lecteur. L'utilisation des technologies sans contact apporte des avantages significatifs pour le document en termes de durée de vie et d'ergonomie.

Cependant, il est important d'assurer au propriétaire que les données de son document d'identité ne peuvent pas être lues à son insu. En effet, la technologie sans contact est d'autant mieux acceptée que l'autorisation de lecture des données stockées dans le document reste sous le contrôle du porteur du document.

Or les passeports électroniques standards peuvent subir des lectures non autorisées à l'aide d'un lecteur extérieur, appelées « skimming » en terminologie anglo-saxonne, même lorsqu'ils sont fermés dans la poche de leur propriétaire. L'objectif est de ne les rendre lisibles que lorsqu'ils sont dans le mode lecture, c'est à dire ouverts.

### ETAT DE LA TECHNIQUE

Afin de lutter contre ces lectures détournées d'informations, plusieurs solutions consistant à faire barrage au champ électromagnétique d'un lecteur sur le principe de la cage de faraday ont déjà été proposées.

La solution connue la plus simple consiste à insérer entre les pages du passeport un encart libre en papier revêtu d'une feuille de métal. Mais cette solution est peu pratique, l'encart devant être retiré lors du contrôle électrique du passeport au poste frontière.

Une autre solution également efficace consiste à insérer le passeport dans un protège-passeport métallique, ce qui a l'avantage de procurer un blindage électromagnétique sur les deux faces du passeport, mais là encore cette solution est peu pratique à l'usage, le passeport devant être retiré de son étui lors du contrôle du passeport.

Le problème du masquage des données contre une lecture effectuée à l'insu du porteur du document a également été abordé dans le document WO2005/066890. Ce document ne concerne que le cas de figure dans lequel la puce du document est reliée à une antenne de taille relativement grande, disposée sur la même feuille que la puce, et apte à entrer directement en communication radiofréquence avec un lecteur distant. La solution préconisée par ce document antérieur consiste à disposer en regard de l'antenne, un élément de masquage passif capable de perturber le couplage électromagnétique entre le transpondeur et l'antenne du lecteur, lorsque le document est fermé. Par conséquent, ce document fait nécessairement appel à un élément de masquage passif, qui représente un coût de fabrication supplémentaire, et qui implique pour sa réalisation une ou plusieurs étapes de fabrication, ce qui augmente le coût de la technologie et par conséquent le coût du document d'identité final. En outre, ce document ne permet pas de répondre au cas de figure nouveau qui est apparu, dans lequel le transpondeur du document est réalisé sur une pastille rapportée et pourvue d'une antenne de petite taille, comme décrit dans la demande de brevet FR 05 01378 de la même demanderesse.

Dans ce cas, le transpondeur du document ne communique pas directement au moyen de sa petite antenne avec un lecteur distant, mais communique par mutuelle inductance avec une antenne d'amplification (encore appelée antenne booster) plus grande située elle aussi sur le document, qui relaie et amplifie la liaison radiofréquence avec le lecteur distant.

On connaît également un document WO 2005/045754 qui décrit un passeport pourvu d'un transpondeur présentant une antenne de grande taille disposée à cheval sur deux pages du passeport, de sorte qu'en position fermée du passeport, le champ électromagnétique capté par l'antenne du transpondeur soit nul et ne permette pas d'alimenter la puce du transpondeur. Ce document ne permet pas de profiter de la technologie de transpondeur sous forme d'une pastille rapportée à intégrer au passeport, telle que décrite dans la demande FR 05 01378 précitée. En outre, l'antenne du transpondeur étant de grande taille et étant directement connectée à la puce du transpondeur, en cas de rupture de l'antenne, qui est notamment susceptible de se produire au niveau du pliage de l'antenne, il faut remplacer l'intégralité du passeport ce qui représente un coût important. De plus, ce document ne convient pas aux lecteurs configurés pour ne lire qu'une seule page du passeport.

Enfin, on connait de par le document FR 2 919 409 A1 un document sécurisé comportant une seule antenne pliable distincte de l'antenne du transpondeur, et disposée à cheval sur deux pages du document de manière qu'en position ouverte de celui-ci elle amplifie le flux électromagnétique capté par l'antenne du transpondeur, et qu'en position fermée du document, elle réduise le flux électromagnétique capté par l'antenne du transpondeur en dessous d'un seuil minimal permettant la communication de la puce électronique avec un lecteur distant.

### BUT DE L'INVENTION

Un but de l'invention est de proposer une nouvelle structure de passeport électronique particulièrement simple et économique à fabriquer et aisé à lire en position ouverte, tout en renforçant l'efficacité du masquage des données contre une lecture non autorisée en position fermée.

### OBJET DE L'INVENTION

Dans son principe, la solution selon l'invention consiste en la mise en regard de 2 antennes similaires par leur géométrie afin que leurs flux électromagnétiques s'annulent en position fermée du livret et empêche la communication du transpondeur avec un lecteur distant.

L'invention a donc pour objet un document sécurisé présentant la forme d'un livret composé d'au moins une feuille repliable autour d'un axe de pliage, le document comportant un transpondeur pourvu d'une puce électronique comportant une mémoire pour le stockage de données et une antenne de transpondeur, caractérisé en ce qu'il comporte en outre deux antennes d'amplification, distinctes de l'antenne du transpondeur, disposées sur des pages du document de manière qu'en position ouverte du document, l'une des antennes d'amplification amplifie le flux électromagnétique capté par l'antenne du transpondeur pour permettre la communication du document avec un lecteur distant, et en ce que les antennes d'amplification sont configurées de manière que les flux électromagnétiques qu'elles génèrent en position fermée du livret sont sensiblement opposés de façon à annuler l'effet d'amplification , le flux électromagnétique capté par l'antenne du transpondeur étant alors inférieur à un seuil minimal nécessaire pour permettre la communication de la puce électronique avec un lecteur distant.

A cet effet, selon un mode de réalisation, les deux antennes d'amplification ont des géométries d'antenne sensiblement identiques et symétriques par rapport à l'axe de pliage du document de façon à se superposer en position fermée du document.

Mais le document doit aussi être lu par un lecteur lorsqu'il est en position ouverte. A cet effet, chaque antenne d'amplification possède une fréquence de résonance apte à assurer, lorsque la feuille interne portant l'antenne du transpondeur est plaquée contre elle en position ouverte du document, un couplage électromagnétique suffisant entre ladite antenne d'amplification et l'antenne du transpondeur pour permettre la communication de la puce électronique avec un lecteur distant.

Selon un mode de réalisation avantageux, l'antenne d'amplification est une antenne booster comportant des spires de grande taille, notamment au format dit ID1 ,tel que défini dans la norme ISO 13444, connectées à une antenne concentrateur.

Plusieurs dispositions relatives des antennes booster et du transpondeur sont possibles tout en atteignant les objectifs visés par l'invention.

Selon un mode de réalisation, le transpondeur est situé sur une page interne du livret, et les deux antennes d'amplification, distinctes de l'antenne du transpondeur, sont disposées sur des pages du livret situées de part et d'autre de la page interne portant le transpondeur.

Selon un autre mode de réalisation, le transpondeur et l'une des deux antennes booster sont situés sur une même page externe ou page de couverture du document, et l'autre antenne booster est située sur l'autre page de couverture ou sur une autre page interne du document.

Selon un troisième mode de réalisation, l'une des deux antennes booster et le transpondeur sont situés sur une même page interne du document, et l'autre antenne booster est située sur une page externe ou page de couverture du document.

Selon un mode de réalisation avantageux, l'une des antennes d'amplification possède une fréquence de résonance inférieure à la fréquence de la porteuse utilisée par le transpondeur, et l'autre antenne d'amplification possède une fréquence de résonance supérieure à la fréquence de la porteuse utilisée par le transpondeur.

Selon un mode de réalisation, la fréquence de la porteuse utilisée par le transpondeur est de 13,56 Mhz, et les fréquences de résonance des deux antennes d'amplification sont situées de part et d'autre de la fréquence de porteuse et sont espacées d'environ 2 Mhz.

Selon un mode de réalisation du document, la page de données qui porte le transpondeur est en polycarbonate.

### DESCRIPTION DETAILLEE

L'invention sera décrite plus en détail en référence aux figures ci-jointes dans lesquelles :
La figure 1 représente un schéma électrique équivalent du passeport électronique selon l'invention.
La figure 2 représente un premier mode de réalisation du passeport électronique selon l'invention.
La figure 3 représente un second mode de réalisation du passeport électronique selon l'invention.
La figure 4 représente un troisième mode de réalisation du passeport électronique selon l'invention.

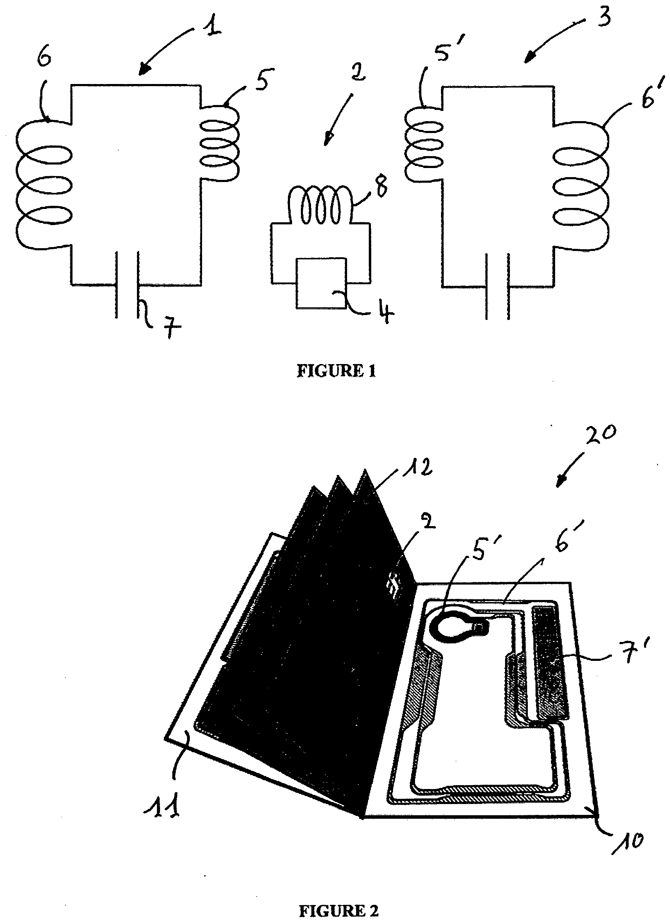

On se réfère à la figure 1 qui représente un schéma électrique équivalent du passeport électronique selon l'invention. D'un point de vue électrique, le document ou passeport électronique 20 comporte un transpondeur 2, et deux antennes booster 1,3.

Le transpondeur 2 est composé d'une puce microélectronique 4 pourvue de sa capacité interne (non représentée) et d'une inductance 8, la capacité et l'inductance formant un circuit radiofréquence résonant permettant de communiquer en mode sans contact.

Les deux antennes booster (1,3) comprennent chacune, de façon classique, une première inductance (6,6') formée par des spires de grande taille, notamment au format dit ID1 dans la norme ISO 14443-1, et une seconde inductance (5,5') formée par des spires de plus petite taille destinées à être couplées, à tour de rôle, avec les spires de l'inductance 8 du transpondeur 2 afin d'amplifier le signal du transpondeur et de permettre la communication radiofréquence entre le transpondeur et un lecteur sans contact distant.

Les figures 2 à 4 représentent plusieurs dispositions concrètes du transpondeur 2 et des antennes booster 1,3 sur un livret passeport 20.

Dans un premier mode de réalisation (figure 2), le transpondeur 2 est intégré à une page intérieure 12 du livret du passeport, et les deux antennes booster (1,3) sont disposées dans les pages de couverture (11,10) du passeport. Cette configuration présente l'avantage que la page interne 12 qui porte le transpondeur peut être une page de données (« datapage » en terminologie anglo-saxonne) conventionnelle, réalisée en polycarbonate. Dans cette configuration, pour assurer une communication radiofréquence entre le transpondeur et un lecteur distant, il est nécessaire de plaquer la page 12 qui porte le transpondeur 2, contre l'une des pages de couverture (10,11) du passeport, afin d'assurer un couplage électromagnétique entre le transpondeur et l'une des antennes booster (1,3).

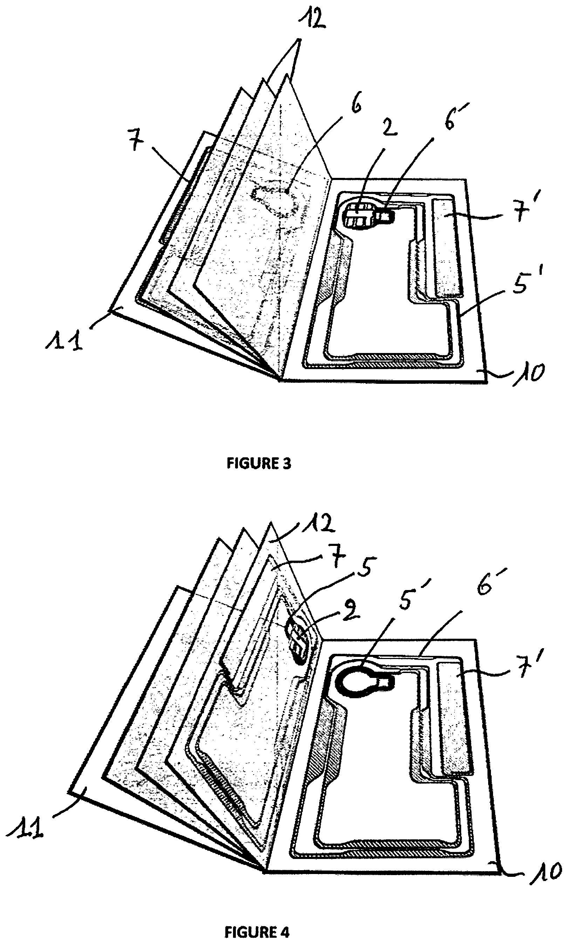

Dans un second mode de réalisation (figure 3), le transpondeur 2 est intégré à l'une des pages de couverture (10,11) qui porte les antennes booster (1,3). Dans ce cas le passeport peut communiquer avec un lecteur distant dès qu'il est en position ouverte, puisque l'antenne du transpondeur sera toujours couplée avec une antenne booster, en l'occurrence avec l'antenne booster 3 intégrée à la page verso de couverture 10 dans la version représentée. L'autre antenne booster 1 peut être intégrée à l'autre page de couverture 11, ou dans une page interne 12 du document.

Dans un troisième mode de réalisation (figure 4), le transpondeur 2 et l'une des antennes booster (1,3) sont tous deux intégrés dans une page interne 12 du livret passeport. Là encore, le passeport peut communiquer avec un lecteur distant dès qu'il est en position ouverte, puisque l'antenne du transpondeur sera toujours couplée avec l'une des antennes booster, en l'occurrence avec l'antenne booster 1.

Il est essentiel de noter que selon l'invention, les antennes booster (1,3), quelles que soient leurs positions sur les pages du livret passeport, sont configurées de manière qu'en position fermée du passeport, les flux électromagnétiques qu'elles génèrent lorsqu'elles sont placées dans le champ électromagnétique d'un lecteur, s'annulent sensiblement, ou du moins se perturbent suffisamment pour que le champ résultant ne permette pas d'assurer une communication radiofréquence entre le transpondeur 2 et un lecteur distant.

Afin d'obtenir ce résultat, il est utile que les géométries des antennes booster (1,3) soient identiques ou quasi-identiques. Par exemple, les spires des inductances (5,6) de la première antenne booster 1 ont la même taille et la même position sur la page de passeport que, respectivement, les spires des inductances (5', 6') de la seconde antenne booster 3.

Les antennes booster (1,3) sont avantageusement réalisées par gravure à partir de pages de livret revêtues d'une couche mince d'aluminium ou équivalent.

Des essais ont montré que les meilleurs résultats en termes de blocage de la communication en position fermée du passeport sont obtenus lorsque les capacités d'ajustement (7,7') des deux antennes booster (1,3) sont légèrement différentes pour que les pics de résonance des deux antennes booster soient décalés d'une certaine valeur. Ainsi, lorsque la fréquence de fonctionnement du transpondeur est de l'ordre de 13,56 Mhz comme cela est classique, il est optimal que les fréquences de résonance des antennes booster soient l'une inférieure à 13,56 Mhz et l'autre supérieure à 13,56 Mhz, et qu'elles soient séparées d'une valeur de l'ordre de 2 Mhz.

### AVANTAGES DE L'INVENTION

L'invention répond aux buts fixés et permet de pallier les limitations des passeports électroniques connus.

En particulier, le document sécurisé selon l'invention est efficace en position fermée, quelle que soit la surface (avant, arrière) du document qui est exposée au flux électromagnétique d'un lecteur, alors que les documents sécurisés connus qui sont pourvus d'une feuille de blindage électromagnétique sont efficaces principalement lorsque la surface présentée au lecteur est celle qui porte la feuille de blindage, mais sont moins efficaces lorsque la face présentée au lecteur ne porte pas de feuille de blindage.

Par ailleurs, du fait de l'intégration de la fonctionalité de blindage électromagnétique dans le passeport lui-même, celui-ci présente une meilleure ergonomie car ne nécessite pas de retirer une pochette ou un encart métallique.

En outre, les techniques de fabrication des antennes par gravure de couches d'aluminium permettent de réaliser des inductances de valeurs précises, et à faible coût de revient.

## Revendications

1. - Document sécurisé (20) présentant la forme d'un livret composé d'au moins une feuille (10,11,12) repliable autour d'un axe de pliage, le document comportant un transpondeur (2) pourvu d'une puce électronique (4) comportant une mémoire pour le stockage de données et une antenne (8) de transpondeur, **caractérisé en ce qu'**il comporte en outre deux antennes d'amplification (1,3), distinctes de l'antenne (8) du transpondeur, disposées sur des pages du document de manière qu'en position ouverte du document, l'une des antennes d'amplification (1,3) amplifie le flux électromagnétique capté par l'antenne du transpondeur pour permettre la communication du document avec un lecteur distant, et **en ce que** les antennes d'amplification (1,3) sont configurées de manière que les flux électromagnétiques qu'elles génèrent en position fermée du livret sont sensiblement opposés de façon à annuler l'effet d'amplification, le flux électromagnétique capté par l'antenne du transpondeur étant alors inférieur à un seuil minimal nécessaire pour permettre la communication de la puce électronique (4) avec un lecteur distant.

2. - Document de sécurité selon la revendication 1 , **caractérisé en ce que** les deux antennes d'amplification (1,3) ont des géométries d'antenne sensiblement identiques et symétriques par rapport à l'axe de pliage de façon à se superposer en position fermée du document.

3. - Document sécurisé selon l'une quelconque des revendications précédentes, caractérisé en ce chaque antenne d'amplification (1,3) possède une fréquence de résonance apte à assurer, lorsque la feuille interne (12) portant l'antenne (8) du transpondeur est plaquée contre elle en position ouverte du document, un couplage électromagnétique suffisant entre ladite antenne d'amplification (1,3) et l'antenne (8) du transpondeur pour permettre la communication de la puce électronique (4) avec un lecteur distant.

4. - Document sécurisé selon l'une quelconque des revendications précédentes, **caractérisé en ce que** l'antenne d'amplification (1,3) est une antenne booster comportant des spires (6, 6') au format dit ID1, tel que défini dans la norme ISO 13444, connectées à une antenne concentrateur (5, 5').

5. - Document sécurisé selon l'une quelconque des revendications précédentes, **caractérisé en ce que** le transpondeur (2) est situé sur une page interne (12) du livret, et **en ce que** les deux antennes d'amplification (1,3), distinctes de l'antenne (8) du transpondeur sont disposées sur des pages du livret situées de part et d'autre de la page interne (12) portant le transpondeur.

6. - Document sécurisé selon l'une quelconque des revendications 1 à 4, **caractérisé en ce que** le transpondeur (2) et l'une des deux antennes booster (1,3) sont situés sur une même page externe (10, 11) ou page de couverture du document, et **en ce que** l'autre antenne booster est située sur l'autre page de couverture ou sur une page interne (12) du document.

7. - Document sécurisé selon l'une quelconque des revendications 1 à 4, **caractérisé en ce que** le transpondeur (2) et l'une des deux antennes booster (1,3) sont situés sur une même page interne (12) du document, et **en ce que** l'autre antenne booster est située sur une page externe (10, 11) ou page de couverture du document.

8. - Document sécurisé selon l'une quelconque des revendications précédentes, **caractérisé en ce que** l'une des antennes d'amplification (1,3) possède une fréquence de résonance inférieure à la fréquence de la porteuse utilisée par le transpondeur (2), **en ce que** l'autre antenne d'amplification (1,3) possède une fréquence de résonance supérieure à la fréquence de la porteuse utilisée par le transpondeur.

9. - Document sécurisé selon la revendication 8, **caractérisé en ce que** la fréquence de la porteuse utilisée par le transpondeur (2) est de 13,56 Mhz, et **en ce que** les fréquences de résonance des deux antennes d'amplification (1,3) sont espacées d'environ 2 Mhz.

10. - Document sécurisé selon l'une quelconque des revendications précédentes, **caractérisé en ce que** la page de données qui porte le transpondeur est en polycarbonate.

## Patentansprüche

1. Gesichertes Dokument (20) in Form eines Hefts, das aus mindestens einem um eine Faltachse faltbaren Blatt (10, 11, 12) besteht, wobei das Dokument einen Transponder (2), der mit einem einen Speicher zum Speichern von Daten aufweisenden Chip (4) versehen ist, und eine Transponderantenne (8) aufweist, **dadurch gekennzeichnet, dass** es außerdem zwei sich von der Antenne (8) des Transponders unterscheidende Verstärkungsantennen (1, 3) aufweist, die auf Seiten des Dokuments angeordnet sind, so dass in der offenen Stellung des Dokuments eine der Verstärkungsantennen (1, 3) den von der Antenne des Transponders aufgefangenen elektromagnetischen Fluss verstärkt, um die Kommunikation des Dokuments mit einem fernen Lesegerät zu erlauben, und dass die Verstärkungsantennen (1, 3) so konfiguriert sind, dass die elektromagnetischen Flüsse, die sie in der geschlossenen Stellung des Hefts erzeugen, im Wesentlichen entgegengesetzt sind, um die Verstärkungswirkung aufzuheben, wobei der von der Antenne des Transponders aufgefangene elektromagnetische Fluss dann geringer ist als eine Mindestschwelle, die notwendig ist, um die Kommunikation des Chips (4) mit einem fernen Lesegerät zu erlauben.

2. Sicherheitsdokument nach Anspruch 1, **dadurch gekennzeichnet, dass** die zwei Verstärkungsantennen (1, 3) im Wesentlichen gleiche und bezüglich der Faltachse symmetrische Geometrien haben, um sich in der geschlossenen Stellung des Dokuments zu überlagern.

3. Gesichertes Dokument nach einem der vorhergehenden Ansprüche, **dadurch gekennzeichnet, dass** jede Verstärkungsantenne (1, 3) eine Resonanzfrequenz besitzt, die fähig ist, wenn das die Antenne (8) des Transponders tragende innere Blatt (12) in der offenen Stellung des Dokuments gegen sie gedrückt wird, eine ausreichende elektromagnetische Kopplung zwischen der Verstärkungsantenne (1, 3) und der Antenne (8) des Transponders zu gewährleisten, um die Kommunikation des Chips (4) mit einem fernen Lesegerät zu erlauben.

4. Gesichertes Dokument nach einem der vorhergehenden Ansprüche, **dadurch gekennzeichnet, dass** die Verstärkungsantenne (1, 3) eine Booster-Antenne ist, die Windungen (6, 6) im so genannten Id1-Format, wie in der Norm ISO 13444 definiert, aufweist, die mit einer Konzentrator-Antenne (5, 5') verbunden sind.

5. Gesichertes Dokument nach einem der vorhergehenden Ansprüche, **dadurch gekennzeichnet, dass** der Transponder (2) sich auf einer inneren Seite (12) des Hefts befindet, und dass die zwei sich von der Antenne (8) des Transponders unterscheidenden Verstärkungsantennen (1, 3) auf Seiten des Hefts angeordnet sind, die sich zu beiden Seiten der den Transponder tragenden inneren Seite (12) befinden.

6. Gesichertes Dokument nach einem der Ansprüche 1 bis 4, **dadurch gekennzeichnet, dass** der Transponder (2) und die eine der zwei Booster-Antennen (1, 3) sich auf einer gleichen äußeren Seite (10, 11) oder Deckseite des Dokuments befinden, und dass die andere Booster-Antenne sich auf der anderen Deckseite oder auf einer inneren Seite (12) des Dokuments befindet.

7. Gesichertes Dokument nach einem der Ansprüche 1 bis 4, **dadurch gekennzeichnet, dass** der Transponder (2) und die eine der zwei Booster-Antennen (1, 3) sich auf einer gleichen inneren Seite (12) des Dokuments befinden, und dass die andere Booster-Antenne sich auf einer äußeren Seite (10, 11) oder Deckseite des Dokuments befindet.

8. Gesichertes Dokument nach einem der vorhergehenden Ansprüche, **dadurch gekennzeichnet, dass** eine der Verstärkungsantennen (1, 3) eine Resonanzfrequenz niedriger als die Frequenz des vom Transponder (2) verwendeten Trägers besitzt, dass die andere Verstärkungsantenne (1, 3) eine Resonanzfrequenz höher als die Frequenz des vom Transponder verwendeten Trägers besitzt.

9. Gesichertes Dokument nach Anspruch 8, **dadurch gekennzeichnet, dass** die Frequenz des vom Transponder (2) verwendeten Trägers 13,56 MHz beträgt, und dass die Resonanzfrequenzen der zwei Verstärkungsantennen (1, 3) einen Abstand von etwa 2 MHz haben.

10. Gesichertes Dokument nach einem der vorhergehenden Ansprüche, **dadurch gekennzeichnet, dass** die Datenseite, die den Transponder trägt, aus Polycarbonat ist.

## Claims

1. Secure document (20) in the form of a booklet composed of at least one leaf (10, 11, 12) that can be folded about a fold axis, the document comprising a transponder (2) provided with an electronic chip (4) comprising a memory for the storage of data and a transponder antenna (8), **characterized in that** it further comprises two amplification antennas (1, 3), distinct from the transponder antenna (8), disposed on pages of the document such that, when the document is in the open position, one of the amplification antennas (1, 3) amplifies the electromagnetic flux picked up by the antenna of the transponder to allow the document to communicate with a remote reader, and **in that** the amplification antennas (1, 3) are configured such that the electromagnetic fluxes that they generate when the booklet is in the closed position are substantially opposed so as to cancel the amplification effect, the electromagnetic flux picked up by the antenna of the transponder then being below a minimum threshold necessary to allow the electronic chip (4) to communicate with a remote reader.

2. Secure document according to Claim 1, **characterized in that** the two amplification antennas (1, 3) have antenna geometries that are substantially identical and symmetrical with respect to the fold axis so as to be superimposed when the document is in the closed position.

3. Secure document according to either one of the preceding claims, **characterized in that** each amplification antenna (1, 3) has a resonant frequency capable of ensuring, when the internal leaf (12) bearing the antenna (8) of the transponder is pressed against it when the document is in the open position, a sufficient electromagnetic coupling between said amplification antenna (1, 3) and the antenna (8) of the transponder to allow the electronic chip (4) to communicate with a remote reader.

4. Secure document according to any one of the preceding claims, **characterized in that** the amplification antenna (1, 3) is a booster antenna comprising turns (6, 6') in the so-called ID1 format, as defined in the ISO 13444 standard, connected to a concentrating antenna (5, 5').

5. Secure document according to any one of the preceding claims, **characterized in that** the transponder (2) is situated on an inside page (12) of the booklet, and **in that** the two amplification antennas (1, 3), distinct from the antenna (8) of the transponder, are disposed on pages of the booklet situated on either side of the inside page (12) bearing the transponder.

6. Secure document according to any one of Claims 1 to 4, **characterized in that** the transponder (2) and one of the two booster antennas (1, 3) are situated on a same external page (10, 11) or cover page of the document, and **in that** the other booster antenna is situated on the other cover page or on an inside page (12) of the document.

7. Secure document according to any one of Claims 1 to 4, **characterized in that** the transponder (2) and one of the two booster antennas (1, 3) are situated on a same inside page (12) of the document, and **in that** the other booster antenna is situated on an external page (10, 11) or cover page of the document.

8. Secure document according to any one of the preceding claims, **characterized in that** one of the amplification antennas (1, 3) has a resonant frequency lower than the frequency of the carrier used by the transponder (2), and **in that** the other amplification antenna (1, 3) has a resonant frequency higher than the frequency of the carrier used by the transponder.

9. Secure document according to Claim 8, **characterized in that** the frequency of the carrier used by the transponder (2) is 13.56 MHz, and **in that** the resonant frequencies of the two amplification antennas (1, 3) are spaced apart by approximately 2 MHz.

10. Secure document according to any one of the preceding claims, **characterized in that** the data page which bears the transponder is made of polycarbonate.
